(19) **Europäisches Patentamt / European Patent Office / Office européen des brevets**

(11) **EP 3 783 541 A1**

(12) **EUROPEAN PATENT APPLICATION**

(43) Date of publication:
**24.02.2021 Bulletin 2021/08**

(21) Application number: **19192404.2**

(22) Date of filing: **19.08.2019**

(51) Int Cl.:
*G06N 3/08* (2006.01)     *G06N 7/00* (2006.01)
*G06N 20/10* (2019.01)    *G06N 20/20* (2019.01)
*G06N 3/04* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Secondmind Limited
Cambridge, Cambridgeshire CB2 1LA (GB)**

(72) Inventors:
• **BOUSTATI, Ayman
Cambridge, Cambridgeshire CB2 1LA (GB)**

• **JOHN, Sebastian
Cambridge, Cambridgeshire CB2 1LA (GB)**
• **VALIKI, Sattar
Cambridge, Cambridgeshire CB2 1LA (GB)**
• **HENSMAN, James
Cambridge, Cambridgeshire CB2 1LA (GB)**

(74) Representative: **EIP
EIP Europe LLP
Fairfax House
15 Fulwood Place
London WC1V 6HU (GB)**

(54) **COMPUTATIONAL INFERENCE SYSTEM**

(57)      A data processing system for inferring a statistical model from a dataset comprising a plurality of observation points includes first memory circuitry arranged to store the dataset and second memory circuitry arranged to store a set of parameters for the statistical model. The system further includes a sampler arranged to randomly sample a mini-batch of the observation points from the dataset and transfer the sampled mini-batch from the first memory circuitry to the second memory circuitry, and processing circuitry arranged to determine, for each observation point in the sampled mini-batch, a stochastic estimator for a respective component of a gradient of an objective function with respect to the parameters of the statistical model. Furthermore, the system includes a recognition network module arranged to: process the observation points in the sampled mini-batch using a neural recognition network to generate, for each observation point in the mini-batch, a respective set of control coefficients; and modify, for each observation point in the sampled mini-batch, the stochastic estimator for the respective component of the gradient using the respective set of control coefficients. The processing circuitry is arranged to update the parameters of the statistical model in accordance with a gradient estimate based on the modified stochastic estimators, to increase or decrease the objective function.

Fig. 1

**Description**

<u>Technical Field</u>

The present invention relates to systems and methods for improving the efficiency of computational inference. The invention has particular, but not exclusive, relevance to the field of variational inference.

<u>Background</u>

Computational inference involves the automatic processing of empirical data to determine parameters for a statistical model such as a neural network-based model, a Gaussian process (GP) model, or any other type of statistical model as appropriate. The well-defined mathematical framework of Bayesian statistics leads to an objective function which serves as a performance metric for the model, and the model parameters which optimise the objective function yield the best possible performance of the model over the observed dataset. The computational task of determining the optimal parameters for a given model poses significant technical challenges, particularly for large datasets.

Gradient descent is a widely used computational method for optimising objective functions such as those arising in computational inference, machine learning and related fields. In computational inference, the objective functions typically contain a sum of component terms, with each component corresponding to a respective data point in a dataset. Standard gradient descent (sometimes referred to as batch gradient descent) requires a partial gradient to be determined for each component term, and in cases where the objective function depends on a large number of data points, for example in big data applications, standard gradient descent often leads to prohibitive computational cost and memory requirements. Furthermore, the full dataset may be too large to store in available random-access memory (RAM) at once, limiting the applicability of techniques such as vectorisation for improving computational efficiency.

To mitigate the high cost and low efficiency of batch gradient descent, stochastic gradient descent (SGD) has been developed in which individual data points or relatively small mini-batches of data points are sampled at each gradient descent step, from which stochastic estimators for the gradient of the optimisation objective are derived. In this way, SGD can allow for improved efficiency and scalability to larger datasets without modifying the underlying optimisation task.

In many applications, the component terms in an objective function are formed of statistical expectations of stochastic quantities. These expectations are typically intractable, so to overcome this problem, Monte Carlo samples are used to compute unbiased estimators for the expectations and their gradients.

Using SGD in conjunction with Monte Carlo sampling significantly reduces the computational cost of the optimisation procedure. However, the resulting gradient estimators are doubly stochastic owing to the random sampling by SGD and the random sampling of the stochastic functions, and accordingly have a high statistical variance. This high variance limits both the efficiency of the optimisation procedure and in some cases the ability of the optimiser to reach the true optimum of the objective function. This in turn limits the scalability of computational inference to larger datasets for more complex models.

<u>Summary</u>

According to a first aspect of the present invention, there is provided a data processing system for inferring a statistical model from a dataset comprising a plurality of observation points. The system includes first memory circuitry arranged to store the dataset and second memory circuitry arranged to store a set of parameters for the statistical model. The system further includes a sampler arranged to randomly sample a mini-batch of the observation points from the dataset and transfer the sampled mini-batch from the first memory circuitry to the second memory circuitry, and processing circuitry arranged to determine, for each observation point in the sampled mini-batch, a stochastic estimator for a respective component of a gradient of an objective function with respect to the parameters of the statistical model. Furthermore, the system includes a recognition network module arranged to: process the observation points in the sampled mini-batch using a neural recognition network to generate, for each observation point in the mini-batch, a respective set of control coefficients; and modify, for each observation point in the sampled mini-batch, the stochastic estimator for the respective component of the gradient using the respective set of control coefficients. The processing circuitry is arranged to update the parameters of the statistical model in accordance with a gradient estimate based on the modified stochastic estimators, to increase or decrease the objective function.

Using control coefficients to modify a stochastic gradient estimate allows for the variance of the stochastic gradient estimator to be reduced without additional samples being taken from the optimisation objective, reducing the number of gradient descent steps required to optimise the objective and facilitating improved convergence towards an optimal value. Using a neural recognition network to generate suitable control coefficients, instead of explicitly computing optimal control coefficients at each gradient descent step, results in a method in which computational resources scale favourably both in terms of memory requirements and numbers of processing operations.

Further features and advantages of the invention will become apparent from the following description of preferred embodiments of the invention, given by way of example only, which is made with reference to the accompanying drawings.

Brief Description of the Drawings

Figure 1 is a schematic block diagram showing a data processing system arranged in accordance with an embodiment of the present invention.

Figure 2 is a flow chart representing a method for performing statistical inference in accordance with an embodiment of the present invention.

Figure 3 shows examples of trajectories in a two-dimensional parameter space for three different optimisation schemes.

Figure 4 shows an example of a recognition network in accordance with an embodiment of the present invention.

Figure 5 shows results of an experiment in which the present invention is applied to a logistic regression problem.

Figures 6 and 7 show results of an experiment in which the present invention is applied to a deep Gaussian process (DGP) regression problem.

Figure 8 schematically illustrates a statistical inference setting in which empirical data from wind tunnel experiments is processed using a DGP model.

Detailed Description

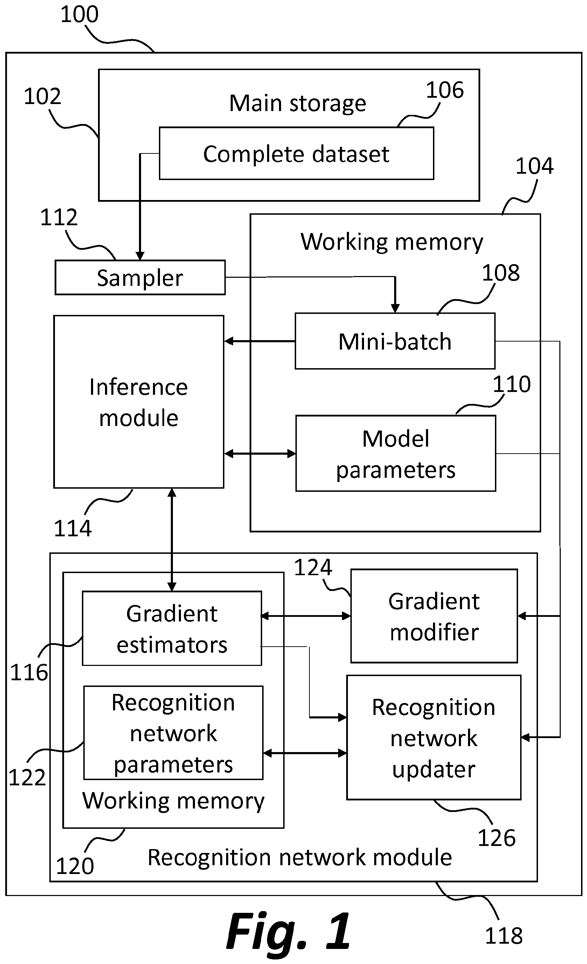

Figure 1 shows an example of a data processing system 100 arranged to perform statistical inference in accordance with an embodiment of the present invention. The system includes various additional components not shown in Figure 1 such as input/output devices, network interfaces, and the like. The data processing system 100 includes first memory circuitry including main storage 102, which in this example is a solid-state drive (SSD) for nonvolatile storage of relatively large volumes of data. In other examples, a data processing system may additionally or instead include a hard disk drive and/or removable storage devices as first memory circuitry. The data processing system 100 further includes second memory circuitry including working memory 104, which in this example includes volatile random-access memory (RAM), in particular static random-access memory (SRAM) and dynamic random-access memory (DRAM).

The working memory 104 is more quickly accessible by processing circuitry than the main storage 102 but has a significantly lower storage capacity. In this example, the main storage 102 is capable of storing an entire dataset 106 made up of multiple data points referred to as observation points. Specific examples will be discussed hereinafter. By contrast, in this example the working memory 104 has insufficient capacity to store the entire dataset 106 but has sufficient capacity to store a mini-batch 108 formed of a subset of the observation points. The working memory 104 is further arranged to store model parameters 110 for a statistical model. The statistical model may be any type of model suitable for modelling the dataset 106, for example a Gaussian process (GP) model, a deep Gaussian process (DGP) model, a linear regression model, a logistic regression model, or a neural network model. Certain statistical models may be implemented using multiple neural networks, for example a variational autoencoder (VAE) implemented using two neural networks.

The data processing system 100 includes a sampler 112, which in the present example is a hardware component arranged to randomly sample a mini-batch 108 of observation points from the dataset 106 and transfer the randomly sampled mini-batch 108 from the main storage 102 to the working memory 104. In other examples, a sampler may be implemented by software, for example as program code executed by processing circuitry of the data processing system 100.

The data processing system 100 includes an inference module 114, which includes processing circuitry for performing statistical inference on the dataset 106 in accordance with a predetermined statistical model. As will be described in more detail hereafter, the statistical inference leads to an optimisation problem for an objective function (also referred to as a cost function, a loss function or a value function depending on the context) formed of a sum of component terms each corresponding to an observation point and containing an intractable expectation value. The inference module 114 is arranged to determine, for each of the observation points in the mini-batch 108, a stochastic estimator for a respective component of a gradient of the objective function with respect to the model parameters 110. A naive estimate of the gradient of the objective function is given by a sum of the determined Monte Carlo gradient estimates, and this naive estimate can be used to perform a gradient-based update of the model parameters 110. However, the naive estimate has a high variance due to the SGD sampling of the mini-batch 108 and the Monte Carlo sampling of expectation values. This high variance limits the efficiency of the optimisation method, and also the ability of the inference module 114 to reach the true optimum of the optimisation objective. In order to mitigate these effects of high variance on the efficiency of optimisation, in accordance with the present invention the data processing system 100 includes an additional recognition network module 118.

The recognition network module 118 is arranged to receive gradient estimates 116 from the inference module 114 and to store the gradient estimates 116 in working memory 120. The working memory 120 also stores parameters 122 of a neural recognition network. The recognition network parameters 122 are used by a gradient modifier 124 to modify the gradient estimates 116, as will be explained in more detail hereafter. In the present example, the gradient modifier 124 is implemented as firmware in the recognition network module 118. The recognition network module 118 further includes a recognition network updater 126, which is arranged to update the recognition network parameters 122 at certain stages of the optimisation procedure.

The arrangement of the data processing system 100 allows for statistical inference to be performed efficiently on the dataset 106 even though the dataset 106 is too large to be stored in the working memory 104 and therefore the observation points in the dataset 106 cannot be processed together in a vectorised manner, and the time required to process all of the observation points may be prohibitive. In the present example, performing statistical inference involves determining optimal parameters $\theta^*$ of a statistical model with respect to an objective function $\mathcal{L}$ (which may be a maximum or a minimum value, depending on the definition of the objective function). The optimal parameters $\theta^*$ correspond to a best fit of the statistical model to the dataset. As is typical for such inference tasks, gradient-based optimisation is used to iteratively update a set of parameters $\theta$ until predetermined convergence criteria are satisfied (or until a predetermined number of iterations has been performed).

In the present example, the objective function $\mathcal{L}$ takes the general form given by Equation (1):

$$\mathcal{L} = \sum_{n=1}^{N} \mathbb{E}_{p(\epsilon)}[f_n(\epsilon, \theta)] + \cdots, \qquad (1)$$

where "..." indicates that the objective may include additional terms, but that any additional terms are tractable and computationally cheap to evaluate compared with the sum of terms in Equation (1) and will thus be omitted from the present discussion. The sum contains a term for each observation point $\tilde{x}_n$ in a dataset with $n = 1, ..., N$. The form of Equation (1) is general enough to cover a broad class of statistical inference cases, for example Gaussian process regression/classification, deep Gaussian process regression/classification, linear regression/classification, logistic regression/classification, black box variational inference, as well as generative models such as those implemented using variational autoencoders. Specific examples of statistical inference problems will be described in more detail hereinafter.

In some examples (such as in regression and classification tasks) each observation point $\tilde{x}_n \in \mathbb{R}^{\tilde{d}}$ is representative of an independent variable $x_n$ and a dependent variable $y_n$ such that $\tilde{x}_n = (x_n, y_n)$. In other examples, an observation point $\tilde{x}_n$ is representative solely of an independent variable (for example in the case of a VAE).

Each term in the sum of Equation (1) is given by an expectation of a stochastic function $f_n$ depending on a random variable $\varepsilon \sim p(\varepsilon)$ and the parameters $\theta \in \mathbb{R}^P$ of the statistical model.

In the present example, the dataset of $N$ observation points is assumed to be prohibitively large for an evaluation of every term in Equation (1) to be feasible. An unbiased stochastic estimate of the objective function $\mathcal{L}$ is given by randomly sampling a mini-batch $B \subset \{1, ..., N\}$ containing a subset of the observation points and scaling the objective function appropriately as shown in Equation (2):

$$\mathcal{L} \approx \frac{N}{|B|} \sum_{b \in B} \mathbb{E}_{p(\epsilon)}[f_b(\epsilon, \theta)]. \qquad (2)$$

The sampling of the mini-batch means that the estimate given by Equation (2) is noisy, with different mini-batches giving different estimates of the objective function. The variance of the stochastic estimate decreases as the size of the mini-batch increases. In some examples, a mini-batch may include a single observation point. In other examples, a mini-batch may include multiple observation points, for example 5, 10, 20, 100 or any other number of observation points. The size $|B|$ of the mini-batch is generally independent of the number $N$ of observation points in the dataset and can therefore be kept $O(1)$ even for very large datasets.

The expectation values of the stochastic function $f_b$ in Equation (2) are intractable, but an unbiased stochastic estimate of each term can be determined by taking a Monte Carlo sample of $S$ evaluations of $f_b$ (each corresponding to a respective independent sample of the random variable $\varepsilon$), leading to the doubly-stochastic estimate $\hat{\mathcal{L}}$ of the objective function $\mathcal{L}$ given by Equation (3):

$$\mathcal{L} \approx \frac{N}{|B|} \sum_{b \in B} \hat{l}_b \left( \left\{ \epsilon_b^{(s)} \right\}_{s=1}^S, \theta \right) \equiv \hat{\mathcal{L}}. \tag{3}$$

where $\hat{l}_b \left( \epsilon_b^{(s)}, \theta \right) = 1/S \sum_{s=1}^S f_b \left( \epsilon_b^{(s)}, \theta \right)$ and $\epsilon_b^{(s)} \sim p(\epsilon)$.

Equation (3) implies a doubly stochastic estimate of the gradient of the objective function with respect to the model parameters, given by Equation (4):

$$\hat{G}_i \equiv \frac{\partial \hat{\mathcal{L}}}{\partial \theta_i} = \frac{N}{|B|} \sum_{b \in B} \frac{\partial \hat{l}_b}{\partial \theta_i} \left( \left\{ \epsilon_b^{(s)} \right\}_{s=1}^S, \theta \right) = \frac{N}{|B|} \sum_{b \in B} \hat{g}_{bi} \left( \left\{ \epsilon_b^{(s)} \right\}_{s=1}^S, \theta \right). \tag{4}$$

The $i$th component of the gradient estimate is given by a sum of respective partial gradient estimators $\hat{g}_{bi}$ for the observation points in the mini-batch $B$. Each Monte Carlo sample for each observation point is assumed to have an independent realisation $\epsilon_b^{(s)}$ of the random variable $\varepsilon$ such that $\epsilon_b^{(s)}$ for $b \in B$, $s \in \{1, ..., S\}$ are treated as independent identically distributed (i.i.d.) variables. In a typical SGD scheme, gradient descent/ascent would be performed using a gradient estimate given by Equation (4) at each step to optimise the parameters $\theta$ with respect to the optimisation objective $\mathcal{L}$. However, for examples in which evaluating the stochastic functions $f_n$ is computationally expensive, a relatively small mini-batch size $|B|$ and a relatively small number $S$ of Monte Carlo samples is necessitated, resulting in a high variance of the doubly stochastic estimate, making the SGD highly inefficient and in some cases unable to reach the global optimum of the optimisation objective $\mathcal{L}$. In some cases, only a single Monte Carlo sample is feasible (i.e. $S = 1$). As will be explained in more detail hereafter, the present invention provides a method of reducing the variance of the doubly stochastic gradient estimate whilst only using a single Monte Carlo sample. For $S = 1$, Equation (4) reduces to the form shown in Equation (5):

$$\hat{G}_i = \frac{N}{|B|} \sum_{b \in B} \frac{\partial \hat{l}_b}{\partial \theta_i} (\epsilon_b, \theta) \equiv \frac{N}{|B|} \sum_{b \in B} \hat{g}_{bi} (\epsilon_b). \tag{5}$$

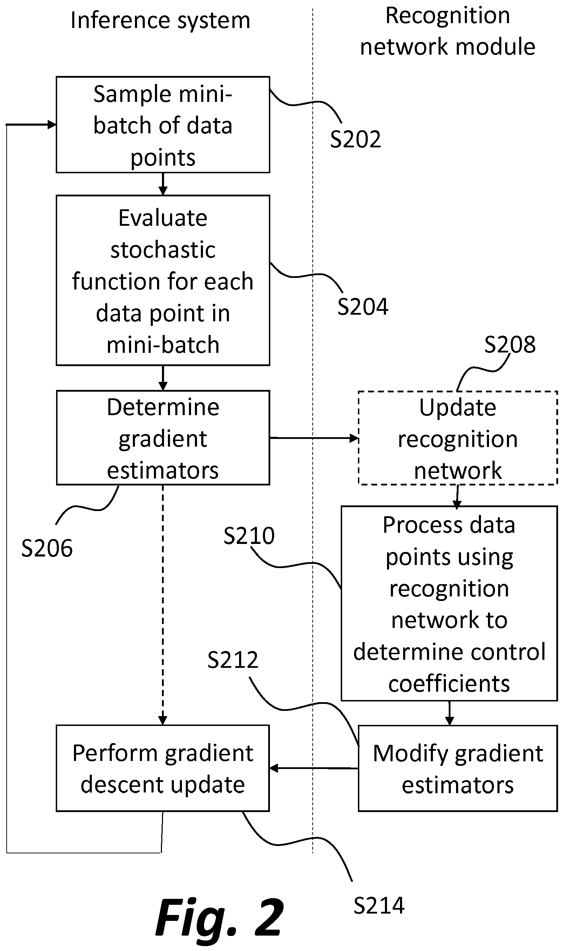

Figure 2 shows an example of an iterative method performed by the data processing system 100 to optimise an objective function $\mathcal{L}$ in accordance with the present invention. Prior to the method being carried out, the dataset 106 is stored in the main storage 102, and a set of parameters $\theta \in \mathbb{R}^P$ of a statistical model is loaded into working memory 104. The data processing method begins with the sampler 112 randomly sampling, at S202, a mini-batch $B$ of observations points from the dataset 106. In the present example, the sampler 112 transfers the sampled mini-batch $B$ to the working memory 104 in which the model parameters $\theta$ are stored. The inference module 114 evaluates, at S204, the stochastic function $f_b$ once for each observation point in the mini-batch B, with each evaluation corresponding to an independent evaluation $\varepsilon_b$ of the random variable $\varepsilon$. The inference module 114 determines, at S206, a partial gradient estimator $\hat{g}_{bi}$ for each of the observation points in the mini-batch $B$. Depending on the form of the stochastic function $f_b$, a partial gradient estimator may have a known analytical expression, or alternatively may be evaluated using reverse-mode automatic differentiation or backpropagation. In examples for which $f_b$ is computationally expensive to evaluate (for example, in the case of a DGP), the corresponding partial gradient estimate is also computationally expensive to evaluate and generally requires both a forward and a reverse pass through the function $f_b$.

Instead of performing a gradient descent update using the partial gradient estimators $\hat{g}_{bi}$ determined at S206 (as indicated by the dashed arrow in Figure 2), in accordance with the present invention the inference module 114 passes the partial gradient estimators $\hat{g}_{bi}$ to the recognition network module 118. During some iterations, the recognition network module updates, at S208, the parameters $\phi$ of the recognition network $r_\phi$. The updating of the recognition network parameters will be explained in more detail hereafter.

The recognition network module 118 processes, at S210, each of the observation points in the sampled mini-batch $B$ using a neural recognition network $r_\phi$ parameterised by a set of recognition network parameters $\phi$ to generate a respective set of control coefficients $c_{bi} = \{r_\phi(\tilde{x}_b)\}_i \in \mathbb{R}^D$. As will be explained in more detail hereafter, the control coefficients are used to reduce the variance of the partial gradient estimators $\hat{g}_{bi}$, allowing for a low-variance gradient estimate based on a single Monte Carlo sample and improving the efficiency of the optimisation procedure.

The recognition network module 118 modifies, at S212, the partial gradient estimators $\hat{g}_{bi}$ using the control coefficients $c_{bi}$ generated at S210. In the present example, modifying the partial gradient estimator includes adding or subtracting one or more control variate terms each including a predetermined function referred to as a control variate multiplied by corresponding control coefficients. In the present example, the modified partial gradient estimators $\tilde{g}_{bi}$ are given by Equation (5):

$$\tilde{g}_{bi}(\epsilon_b) = \hat{g}_{bi}(\epsilon_b) - c_{bi}^T(w_i(\epsilon_b) - W_i), \qquad (5)$$

where $w_i(\varepsilon_b)$ for $i = 1, ...,P$ are control variates with known expectations $\mathbb{E}[w_i(\epsilon)] = W_i$. The modified partial gradient estimator $\tilde{g}_{bi}(\varepsilon_b)$ has the same expectation as the original partial gradient estimator $\hat{g}_{bi}(\varepsilon_b)$. By determining suitable control coefficients, correlations can be induced between the original partial gradient estimators and the control variate terms, resulting in the modified partial gradient estimator $\tilde{g}_{bi}(\varepsilon_b)$ having a lower variance than the original partial gradient estimator.

Denoting a complete collection of control coefficients $C = \{c_{ni}\}_{n=1}^N$ and a batch gradient estimator $\overline{G}$ (determined using the full dataset instead of a mini-batch, i.e. when $|B| = N$), it can be shown that the optimal collection $C^*$ of control coefficients for minimising the variance of the partial gradient estimators $\tilde{g}_{bi}$ is given by Equation (6):

$$C^* = \min_C \mathrm{Tr}\, \mathrm{Cov}\, \overline{G}, \qquad (6)$$

where Tr denotes the trace and Cov denotes the covariance. In principle, if the optimisation problem of Equation (6) can be solved, appropriate control coefficients can be selected for any given mini-batch of observation points. However, the collection $C$ has size $N \times P \times D$, so for large datasets, computing and storing the collection $C^*$ becomes prohibitive both in terms of computational cost and memory requirements. To overcome this problem, the present method uses the recognition network $r_\phi$ to determine control coefficients for the observation points in a given mini-batch at a far lower computational cost than would be required to solve the optimisation problem of Equation (6). By training the recognition network on observation points in a mini-batch, the recognition network learns to output useful control coefficients for observation points throughout the dataset that resemble those in the mini-batch. In this way, the recognition network provides a computationally viable method of reducing the variance of the doubly-stochastic gradient estimate.

Returning to Figure 2, the modified partial gradient estimators $\tilde{g}_{bi}(\varepsilon_b)$ are passed back to the inference module 114, which performs, at S214, a gradient descent/ascent update using the modified gradient estimators. The gradient descent/ascent update is given by $\theta \to \theta \pm \eta_t \tilde{G}$, where $\tilde{G} = (\tilde{G}_1,...,\tilde{G}_P)^T$ with $\tilde{G}_i = \sum_{b \in B} \tilde{g}_{bi}(\varepsilon_b)$. The step size $\eta_t$ is predetermined at each iteration t. The plus sign corresponds to gradient ascent, whereas the minus sign corresponds to gradient descent.

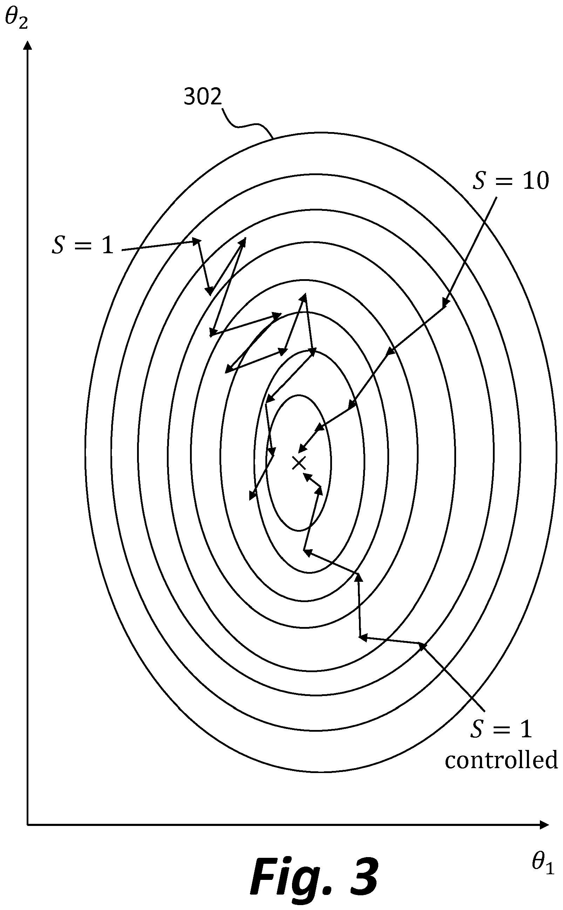

Figure 3 illustrates the effect of using modified gradient estimators to optimise an objective function $\mathcal{L}$ containing a sum of expectation values each corresponding to a respective observation point in a large dataset. Figure 3 shows contours 302 of constant $\mathcal{L}$ in a two-dimensional parameter space, with a global minimum of $\mathcal{L}$ marked "×", and three trajectories through parameter space for three different optimisation schemes (with the parameters initialised with different values for clarity). For the purpose of illustration, the mini-batch size is large in the present example, such that the dominant source of stochasticity results from Monte Carlo sampling of the expectation values in *L*.

A first trajectory, labelled *5* = 1, results from using a single Monte Carlo sample to approximate the expectation for each observation point in a mini-batch. Due to the high variance of the gradient estimate at each SGD step, the optimiser takes many SGD steps to approach the global minimum and will not converge to the global minimum even when close. A second trajectory, labelled *5* = 10, results from using 10 Monte Carlo samples for each observation point. Due to the low variance of the gradient estimate at each SGD step, the optimiser converges to the global minimum in a relatively small number of SGD steps. However, each gradient descent step for *5* = 10 takes approximately an order of magnitude more time than each gradient descent step for *5* = 1. Finally, a third trajectory, labelled *S* = 1 controlled, results from using controlled gradient estimates in accordance with the present invention. The optimiser converges to the global minimum in a slightly greater number of SGD steps than for *S* = 10, but at a far lower computational cost for each SGD step.

**Example of recognition network**

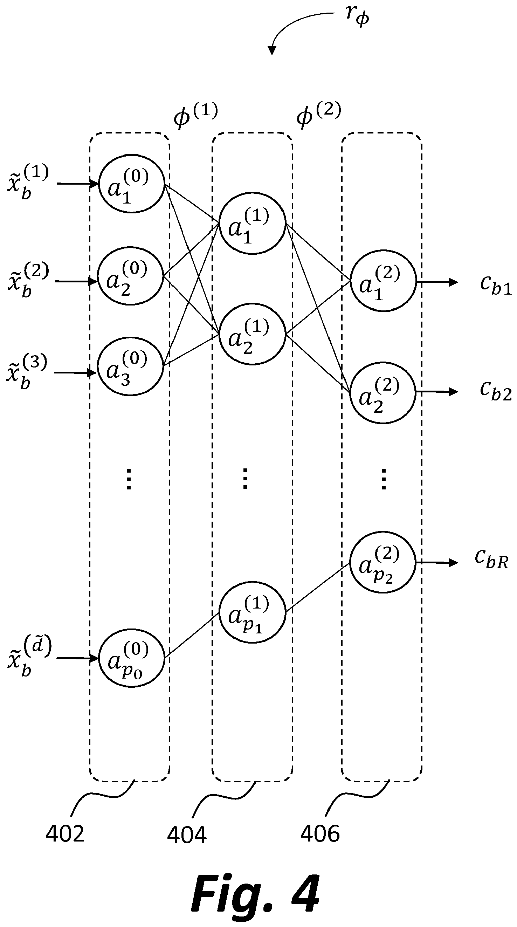

Figure 4 shows an example of a recognition network $r_\phi$ consisting of an input layer 402, a hidden layer 404 and an output layer 406, consisting of $p_0$, $p_1$ and $p_2$ neurons respectively. In the present example, the number $p_2$ of neurons in the output layer is equal to *P*, the number of parameters in the parameter set $\theta$. In the present example, the recognition network $r_\phi$ is fully connected such that each neuron of the input layer 402 is connected with each neuron in the hidden layer 404, and each neuron of the hidden layer 404 is connected with each neuron in the output layer 406. It will be appreciated that other architectures may be used without departing from the scope of the invention. Typically, wider and deeper network architectures lead to improved learning capacity of the recognition network. Associated with each set of connections is a respective matrix $\phi^{(1)}$, $\phi^{(2)}$ of parameters, including connection weights, where in this example the component $\phi_{jk}^{(i)}$ represents the connection weight between the neuron $a_j^{(i)}$ and the neuron $a_k^{(i-1)}$. In the present example, the connection weights are initialised randomly using Xavier initialisation, though it will be appreciated that other initialisation methods may be used instead.

In accordance with the present invention, an observation point $\tilde{x}_b = \left( \tilde{x}_b^{(1)}, \ldots, \tilde{x}_b^{(\tilde{d})} \right)$ is passed to the input layer 402 of the recognition network $r_\phi$. Activations $a_j^{(i)}$ of the neurons in the hidden layer 404 and the output layer 406 are computed by performing a forward pass through the recognition network using the iterative relation $a_j^{(i)} = g\left( z_j^{(i)} \right)$, in which $z_j^{(i)} = \sum_k \phi_{jk}^{(i)} a_k^{(i-1)}$ is the weighted input of the neuron. The activation function *g* is nonlinear with respect to its argument and in this example is the ReLU function, though other activation functions may be used instead, for example the sigmoid activation function. The control coefficients $c_{bi}$ are determined as the activations $a_j^{(2)}$ of the neurons in the output layer 406.

**Training the recognition network**

As mentioned above, the method of Figure 2 is performed iteratively, sampling a new mini-batch of observation points at each iteration. It will be appreciated, however, that the recognition network $r_\phi$ can only generate useful control coefficients if the recognition network is suitably trained. It is therefore necessary for the recognition network module 118 to update, at S208, the parameters $\phi$ of the recognition network $r_\phi$ during at least some of the iterations. In some examples, the parameters $\phi$ are updated during every iteration, resulting in simultaneous optimisation of the optimisation objective function $\mathcal{L}$ and the recognition network $r_\phi$. In other examples, the recognition network is optimised only at certain iterations (for example, every 2, 5 or 10 iterations, or any other suitable number of iterations), such that the same recognition network parameters are used for multiple iterations. In some examples, the order of S208 and S210 may be switched.

During S208, the recognition network parameters are updated to minimise a variance of the gradient estimator $\tilde{G}$. This implies an optimisation problem for the recognition network parameters for a given mini-batch given by Equation

(7):

$$\phi^* = \min_{\phi} \operatorname{Tr} \operatorname{Cov} \tilde{G} = \min_{\phi} \sum_{i=1}^{P} \operatorname{Var} \tilde{G}_i \equiv \min_{\phi} \tilde{V}, \tag{7}$$

In practice, gradient descent, SGD or a variant such as Adam is used to optimise the optimisation objective $\tilde{V}$ with respect to the recognition network parameters. In some examples, only one gradient step is taken at S208, resulting in an interleaving of the training of the recognition network and the optimisation of the statistical model. In other examples, multiple gradient steps are taken during S208, for example such that the parameters $\phi$ are updated until convergence during each instance of S208.

By substituting Equation (5) into Equation (7) and separating out terms that do not depend on the control coefficients $c_{bi}$, the optimisation objective $\tilde{V}$ is reduced to a form given by Equation (8):

$$\tilde{V} = k_1 + \sum_{i=1}^{P} \sum_{b \in B} \left( \mathbb{E}_{p(\epsilon)} \left[ \left( c_{bi}^T (w_i(\epsilon_b) - W_i) \right)^2 \right] \right.$$
$$\left. - 2 \mathbb{E}_{p(\epsilon)} [\hat{g}_{bi} c_{bi}^T (w_i(\epsilon_b) - W_i)] \right), \tag{8}$$

where $k_1$ is independent of the control coefficients $c_{bi}$. The expectation values in Equation (8) are typically intractable. A tractable estimator for the optimisation objective is derived by replacing the expectations with unbiased estimators, for example using Monte Carlo sampling.. In one example, an unbiased estimator $\tilde{V}^{PG}$, referred to as the partial gradients estimator, is derived by replacing each of the expectation values with a single Monte Carlo sample, as shown in Equation (9):

$$\tilde{V}^{PG} = \sum_{i=1}^{P} \sum_{b \in B} \left( \left( c_{bi}^T (w_i(\epsilon_b) - W_i) \right)^2 - 2 \hat{g}_{bi} c_{bi}^T (w_i(\epsilon_b) - W_i) \right), \tag{9}$$

in which the constant term $k_1$ has been disregarded as it does not contribute to the gradient of $\tilde{V}^{FG}$ with respect to the network parameters $\phi$. The gradient of $\tilde{V}^{PG}$ with respect to the recognition network parameters $\phi$ is determined using the chain rule and backpropagation through the recognition network $r_\phi$. It is noted that the computational cost of determining the gradient of $\tilde{V}^{PG}$ is relatively high as the partial gradient is needed per observation point in the mini-batch, and therefore it is necessary to perform $|B|$ additional backward passes through the model objective $\mathcal{L}$.

Due to the relatively high computational cost of determining the gradient of $\tilde{V}^{PG}$, for certain inference problems, the resulting method is no more efficient for reducing the variance of the doubly stochastic gradient estimate than taking additional Monte Carlo samples within the model objective $\mathcal{L}$. Therefore, it is desirable to have a computationally cheaper alternative to the partial gradients estimator $\tilde{V}^{PG}$. By substituting Equation (5) into Equation (7), rearranging, and disregarding terms that do not depend on the control coefficients $c_{bi}$, the optimisation objective is reduced to an alternative form given by Equation (10):

$$\tilde{V} = k_2 + \sum_{i=1}^{P} \sum_{b \in B} \left( \mathbb{E}_{p(\epsilon)} \left[ \left( c_{bi}^T (w_i(\epsilon_b) - W_i) \right)^2 \right] \right.$$
$$\left. - 2 \mathbb{E}_{p(\epsilon)} [\hat{G}_i c_{bi}^T (w_i(\epsilon_b) - W_i)] \right). \tag{10}$$

where $k_2$ is independent of the control coefficients $c_{bi}$. A tractable estimator is then derived by replacing the expectations with unbiased estimators, for example using Monte Carlo sampling. For a single Monte Carlo sample, the resulting estimator is referred to as the gradient sum estimator $\tilde{V}^{GS}$ and is given by Equation (11):

$$\tilde{V}^{\mathrm{GS}} = \sum_{i=1}^{P} \sum_{b \in B} \left( \left( c_{bi}^{T}(w_i(\epsilon_b) - W_i) \right)^2 - 2\hat{G}_i c_{bi}^{T}(w_i(\epsilon_b) - W_i) \right). \qquad (11)$$

in which the constant term $k_2$ has been disregarded as it does not contribute to the gradient of $\tilde{V}^{\mathrm{GS}}$ with respect to the network parameters $\phi$. The gradient sum estimator $\tilde{V}^{\mathrm{GS}}$ has a higher variance than the partial gradient estimator $\tilde{V}^{\mathrm{PG}}$, but is significantly cheaper to evaluate, and for a wide range of inference problems provides a more efficient method of reducing the variance of the doubly stochastic gradient estimate than simply taking more Monte Carlo samples. An alternative computationally cheap estimator is derived by substituting Equation (5) into Equation (7), expanding the variance into moment expectations and disregarding terms that do not depend on the control coefficients $c_{bi}$, resulting in an alternative form given by Equation (12):

$$\tilde{V} = k_3 + \sum_{i=1}^{P} \mathbb{E}_{p(\epsilon)} \left[ \left( \hat{G}_i - \sum_{b \in B} c_{bi}^{T}(w_i(\epsilon_b) - W_i) \right)^2 \right], \qquad (12)$$

where $k_3$ is independent of the control coefficients $c_{bi}$. A tractable estimator is then derived by replacing the expectations with unbiased estimators, for example using Monte Carlo sampling. For a single Monte Carlo sample, the resulting estimator is referred to as the squared different estimator $\tilde{V}^{\mathrm{SD}}$ and is given by Equation (13):

$$\tilde{V}^{\mathrm{SD}} = \sum_{i=1}^{P} \left( \hat{G}_i - \sum_{b \in B} c_{bi}^{T}(w_i(\epsilon_b) - W_i) \right)^2 \qquad (13)$$

in which the constant term $k_3$ has been disregarded as it does not contribute to the gradient of $\tilde{V}^{\mathrm{SD}}$ with respect to the network parameters $\phi$. The squared different estimator $\tilde{V}^{\mathrm{SD}}$ also has a higher variance than the partial gradient estimator $\tilde{V}^{\mathrm{PG}}$, but is significantly cheaper to evaluate, and for a wide range of inference problems provides a more efficient method of reducing the variance of the doubly stochastic gradient estimate than taking additional Monte Carlo samples.

It will be appreciated that the estimators described above do not represent an exhaustive list, and other estimators for the optimisation objective $\tilde{V}$ can be envisaged without departing from the scope of the invention.

**Example: polynomial control variates**

As mentioned above, the present invention provides a method for reducing the variance of doubly-stochastic gradient estimates by introducing control variate terms which correlate with the partial gradient estimates. In a first example, a control variate is linear in $\varepsilon$. The coefficient of the linear term is absorbed into the control coefficients $c_{bi}$ and the constant term cancels in the resulting modified partial gradient estimator, resulting in a control variate given by $w_i(\varepsilon) = \varepsilon$. Using Equation (5), the modified partial gradient estimators in this example are given by Equation (14):

$$\tilde{g}_{bi}(\epsilon_b) = \hat{g}_{bi}(\epsilon_b) - c_{bi}^{T}(\epsilon_b - W_i), \qquad (14)$$

where $W_i = \mathbb{E}[\epsilon]$. In addition to specifying the form of the control variate $w_i(\varepsilon)$, it is necessary to specify the distribution $p(\varepsilon)$ of the random variable $\varepsilon$ underlying the stochasticity in the objective function $\mathcal{L}$. In principle, the present method is applicable for any known distribution $p(\varepsilon)$. For many applications, the objective function $\mathcal{L}$ contains expectations over a collection $\tilde{\epsilon} = \left\{ \tilde{\epsilon}^{(l)} \right\}_{l=1}^{L}$ of one or more random variables, each random variable being distributed according to a respective known distribution $p(\tilde{\epsilon}^{(l)})$. In some examples, particularly in variational inference, each $\tilde{\epsilon}^{(l)}$ is distributed according to a respective multivariate Gaussian distribution $\tilde{\epsilon}^{(l)} \sim \mathcal{N}(\tilde{m}_l, \tilde{\Sigma}_l)$ and can thus be reparameterised as a deterministic function of a random variable $\varepsilon^{(l)}$ distributed according to a normalised multivariate Gaussian distribution

$$\epsilon^{(l)} \sim \mathcal{N}\left(0, I_{d_l}\right)$$

using the relation $\tilde{\varepsilon}^{(l)} = \tilde{m}_l + \text{Cholesky}(\tilde{\Sigma})\varepsilon^{(l)}$, where $d_l$ is the dimension of the random variable $\tilde{\varepsilon}^{(l)}$. Writing $\epsilon = \left\{\epsilon^{(l)}\right\}_{l=1}^{L}$ and noting that any linear combination of control variates is also a valid control variate gives a modified partial gradient estimator as shown by Equation (15):

$$\tilde{g}_{bi}(\epsilon_b) = \hat{g}_{bi}(\epsilon_b) - \sum_{l=1}^{L} c_{bi}^{(l)T}\epsilon_b^{(l)}. \qquad (15)$$

By considering a Taylor expansion of the original partial gradient estimator $\tilde{g}_{bi}$ about $\varepsilon_b = 0$, it can be understood that suitable control coefficients $c_{bi}^{(l)}$ cancel the linear dependence of the partial gradient estimator on the noise, thereby reducing the variance of the partial gradient estimator.

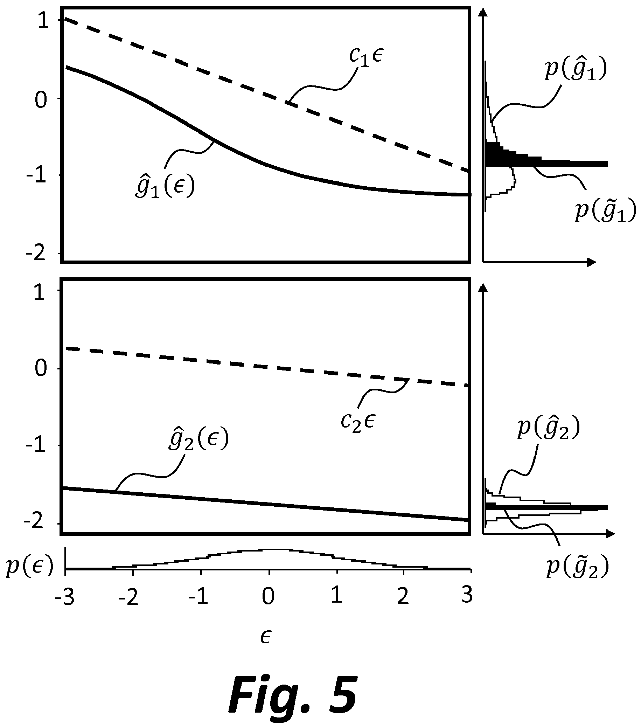

Figure 5 shows an illustrative example in which the present invention is applied in a simple logistic regression problem involving $N = 2$ observation points and a single model parameter to be optimised. In this example, the objective function is reparameterised in terms of an expectation over a random scalar variable

$$\epsilon \sim \mathcal{N}(0,1),$$

and we consider two mini-batches $B = \{1\}$ and $B = \{2\}$ each containing one of the two observation points. The main frame at the top of the figure shows, for the first mini-batch $B = \{1\}$, the dependence of the doubly-stochastic gradient estimator $\hat{g}_1$ on $\varepsilon$ along with the optimal control variate term $c_1\varepsilon$. On the right-hand side of the frame are histograms showing the distributions of the gradient estimator $\hat{g}_1(\varepsilon)$ and the modified gradient estimator $\tilde{g}_1(\varepsilon) = \hat{g}_1(\varepsilon) - c_1\varepsilon$. It is observed from the histograms that the modified gradient estimator has a significantly lower variance than the original gradient estimator. The lower frames show the same information but for the gradient estimator $\hat{g}_2$ corresponding to the second mini-batch $B = \{2\}$. In this case, the dependence of the gradient estimator $\hat{g}_2$ on $\varepsilon$ is approximately linear and therefore the variance can be reduced to almost zero by the linear control variate term $c_2\varepsilon$. In accordance with the present invention, the control coefficients $c_1$ and $c_2$ can be approximated using a single output regression network $r_\phi$.

As explained above, a linear control variate can be used to cancel the dependence of the partial gradient estimators on the noise. In other examples, further polynomial terms can be added to cancel higher order dependence of the partial gradient estimators on the noise. In the case of Gaussian noise, the expectation of each of the polynomial terms is given by a corresponding moment of the multivariate Gaussian distribution. For example, adding quadratic terms results in the modified partial gradient estimator of Equation (16):

$$\tilde{g}_{bi}(\epsilon_b) = \hat{g}_{bi}(\epsilon_b) - \sum_{l=1}^{L}\left(c_{bi}^{(l,1)T}\epsilon_b^{(l)} - c_{bi}^{(l,2)T}\left(\epsilon_b^{(l)2} - \text{diag}(I_{d_l})\right)\right). \qquad (16)$$

where $\epsilon_b^{(l)2}$ denotes the element-wise square of $\epsilon_b^{(l)}$, and the full set of control coefficients is then given by $c_{bi} = \left\{c_{bi}^{(l,1)}, c_{bi}^{(l,2)}\right\}_{l=1}^{L}$. Although higher order polynomial control variates are theoretically able to reduce the variance of the partial gradient estimators more effectively than linear control variates, the additional control coefficients used in this case increases the complexity of the recognition network $r_\phi$, making optimisation of the recognition network more challenging. Linear control variates provide an efficient means of reducing the variance of the doubly stochastic variance estimators.

Although polynomial control variates have been considered in the present section, it will be appreciated that other control variates may be used without departing from the scope of the invention, for example control variates based on radial basis functions or other types of basis function. In particular, any function $w_i(\varepsilon)$ of the random variable $\varepsilon$ with a known expectation may be used as a control variate. Furthermore, although Gaussian random variables have been considered in the above discussion, the present invention is equally applicable to other types of randomness (for example, Poisson noise) provided the control variates have known expectation values under the random variable. Finally, although we have primarily described using a single Monte Carlo sample ($S = 1$), the method described herein is easily extended to multiple Monte Carlo samples ($S > 1$), with additional terms being included in the control variate $w_i$ for each of the additional samples.

**Example: deep Gaussian process variational inference**

Gaussian process (GP) models are of particular interest in Bayesian statistics due to the flexibility of GP priors, which allows GPs to model complex nonlinear structures in data. Unlike neural network models, GP models automatically yield well-calibrated uncertainties, which is of particular importance when high-impact decisions are to be made on the basis of the resulting model, for example in medical applications where a GP model is used to diagnose a symptom. GP models may be used in a variety of settings, for example regression and classification, and are particularly suitable for low-data regimes, in which prediction uncertainties may be large, and must be modelled sensibly to give meaningful results. The expressive capacity of a given GP model is limited by the choice of kernel function. Extending a GP model to having a deep structure can further improve the expressive capacity, whilst continuing to provide well-calibrated uncertainty predictions.

The most significant drawback of DGP models when compared to deep neural network (DNN) models is that the computational cost of optimising the models tend to be higher. The resulting objective functions are typically intractable, necessitating approximations of the objective functions, for example by Monte Carlo sampling. For large datasets, doubly stochastic gradient estimators may be derived based on Monte Carlo sampling of expectation values and minibatch sampling of observation points as described above.

An example of a statistical inference task involves inferring a stochastic function $f : \mathbb{R}^{d_0} \to \mathbb{R}^{d_L}$, given a likelihood $p(y|f)$ and a set of $N$ observation points $\{(x_n, y_n)\}_{n=1}^{N}$, where $x_n \in \mathbb{R}^{d_0}$ are independent variables (referred to sometimes as design locations) and $y_n \in \mathbb{R}^{d_L}$ are corresponding dependent variables. Depending on the specification of the likelihood $p(y|f)$, the present formulation applies both in regression settings and classification settings. Specific examples will be discussed in more detail hereinafter.

In the present example, a deep GP architecture is based on a composition of functions $f(\cdot) = f_L(...,f_2(f_1(\cdot)))$, where each component function $f_l$ is given a GP prior such that $f_l \sim \mathrm{GP}(\mu_l(\cdot), k_l(\cdot, \cdot))$, where $\mu_l$ is a mean function and $k_l$ is a kernel. The functions $f_l : \mathbb{R}^{d_{l-1}} \to \mathbb{R}^{d_l}$ for $l = 1, ..., L - 1$ are hidden layers of the deep GP, whereas the function $f_L : \mathbb{R}^{d_{L-1}} \to \mathbb{R}^{d_L}$ is the output layer of the deep GP (the outputs of the hidden layers and the output layer may be scalar- or vector-valued). The joint density for the deep GP model is given by Equation (17):

$$p(\{y_n\}, \{h_{n,l}\}, \{f_l(\cdot)\}) = \prod_{n=1}^{N} p(y_n | h_{n,L}) \prod_{l=1}^{L} p\left(h_{n,l} \big| f_l(h_{n,l-1})\right) p(f_l(\cdot)), \qquad (17)$$

in which $h_{n,0} \equiv x_n$ and the (predetermined) form of $p(h_{n,l}|f_l(h_{n,l-1}))$ determines how the output vector $h_{n,l}$ of a given GP layer depends on the output of the response function for that layer, and may be chosen to be stochastic or deterministic. In a specific deterministic example, the output of the layer is equal to the output of the response function, such that

$$p\left(h_{n,l} \big| f_l(h_{n,l-1})\right) = \delta\left(h_{n,l} - f_l(h_{n,l-1})\right).$$

In the present example, each layer of the deep GP is approximated by a variational GP $q(f_l)$ with marginals specified at a respective set $Z^l$ of inducing inputs $Z^l = \left(z_1^l, \ldots, z_{M_l}^l\right)^T$. In some examples, the inducing inputs may be placed in a different vector space to that of the input vector $h_{n,l-1}$ for that layer, resulting in so-called inter-domain inducing inputs. The outputs of the component function $f_l$, at the inducing inputs are referred to as inducing variables $u_l = f_l(Z^{l-1})$, which inherit multivariate Gaussian distributions

$$q(u_l) = \mathcal{N}(u_l|m_l, \Sigma_l)$$

from the variational GPs $q(f_l)$. The mean $m_l$ and covariance $\Sigma_l$ for the Gaussian distribution in each layer, along with (optionally) the locations of the inducing inputs $Z^l$ and hyperparameters of the kernels $k_l$, represent a set of parameters $\theta$ of the DGP model to be determined through optimisation.

In the present example, variational Bayesian inference is used such that the model parameters $\theta$ are determined by optimising a lower bound of the log marginal likelihood $\log p(\{y_n\}_{n=1}^N)$ with respect to the model parameters $\theta$. The resulting objective function is given by Equation (18):

$$\mathcal{L} = \sum_{n=1}^N \mathbb{E}_{q(\{h_{n,l}\},\{f_l(\cdot)\})}\left[\log p\left(y_n|h_{n,L}\right)\right] - \sum_{l=1}^L \mathrm{KL}[q(u_l)\|p(u_l)], \qquad (18)$$

where KL denotes the Kullback-Leibler divergence. The objective function is estimated using mini-batches $B$ of size $|B| \ll N$.

The approximate posterior density is given by

$$q(\{h_{n,l}\}, \{f_l(\cdot)\}) = \prod_{n=1}^N \prod_{l=1}^L p\left(h_{n,l}\big|f_l(h_{n,l-1})\right) q(f_l(\cdot)),$$

with the density $q(f_l(\cdot))$ for each layer given by Equations (19)-(21):

$$q\left(f_l(h_{n,l-1})\right) = \mathcal{N}\left(f_l(h_{n,l-1})\big|\, \widetilde{m}_l, \widetilde{\Sigma}_l\right), \qquad (19)$$

where

$$[\widetilde{m}_l]_n = \mu_l\left(h_{n,l-1}\right) + \alpha_l\left(h_{n,l-1}\right)^T\left(m_l - \mu_l(Z^{l-1})\right), \qquad (20)$$

and

$$[\widetilde{\Sigma}_l]_{nm} = k_l\left(h_{n,l-1}, h_{m,l-1}\right) + \alpha_l\left(h_{n,l-1}\right)^T\left(\Sigma_l - k_l(Z^{l-1}, Z^{l-1})\right)\alpha_l\left(h_{m,l-1}\right), \qquad (21)$$

with $\alpha_l(h_{n,l-1}) = k_l(Z^{l-1}, Z^{l-1})^{-1}k_l(Z^{l-1}, h_{n,l-1})$.

The prior distribution $p(u_l)$ and the approximate posterior distribution $q(u_l)$ over the inducing variables $u_l$ in each layer are Gaussian, leading to a closed form expression for each of the KL terms in Equation (18) which is tractable and computationally cheap to evaluate.

Due to the intractability of the expectation terms in Equation (18), it is necessary to draw Monte Carlo samples from the distributions $q(\{h_{n,l}\}, \{f_l(\cdot)\})$. This is achieved using the reparameterisation trick mentioned above, in which a random variable $\varepsilon^{(l)}$ is sampled from a normalised Gaussian distribution

$$\epsilon^{(l)} \sim \mathcal{N}\big(0, I_{d_l}\big),$$

then the random variables $h_{n,l}$ are evaluated using the sampled random variables and the iterative relation

$$h_{n,l} = [\widetilde{m}_l]_n + \epsilon^{(l)} \circ \sqrt{[\widetilde{\Sigma}_l]_{nn}},$$

in which the square root and the product are taken element-wise. It can be seen that the optimisation objective $\mathcal{L}$ has the canonical form of Equation (1) and the present invention can therefore be used to determine low-variance gradient estimates for SGD.

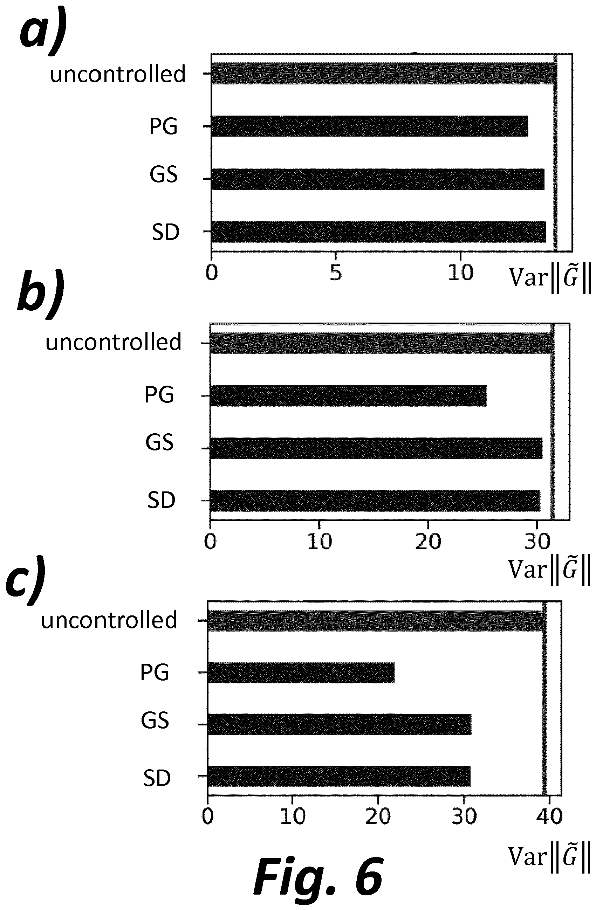

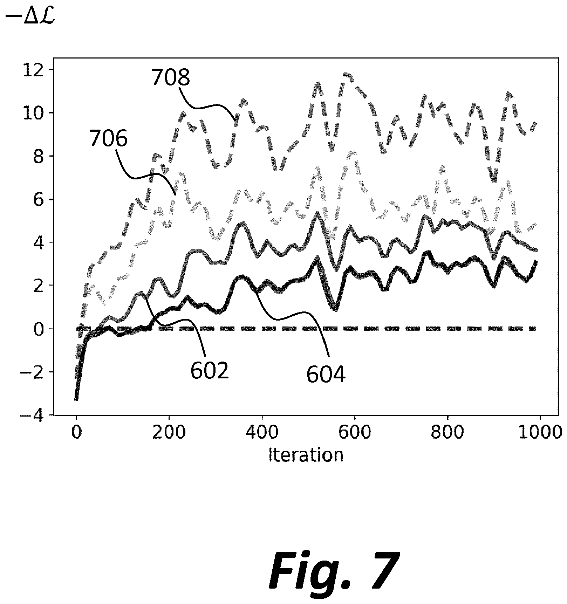

The DGP model discussed above is applicable in a range of technical settings. In a regression setting, the dependent variable $y_n$ corresponds to a scalar or vector quantity representing an attribute of the data. Regression problems arise, for example, in engineering applications, weather forecasting, climate modelling, disease modelling, medical diagnosis, time-series modelling, and a broad range of other applications. Figures 6 and 7 show results from an experiment in which a two-layer DGP model is optimised to fit the National Aeronautics and Space Administration (NASA) "Airfoil Self-Noise" dataset, in which sound pressure is measured for different sizes of aerofoil under different wind tunnel speeds and angles of attack. The dataset includes 1503 observation points, and the input portion $x_n$ of each observation point has the following components: frequency in Hertz; angle of attack in degrees; chord length in meters; free-stream velocity in meters per second; and suction side displacement thickness in meters. The output portion $y_n$ is the measured sound pressure in decibels.

Figure 6 shows the empirical variance of the $L_2$ norm of the gradient estimator $\tilde{G}$ at three different stages in the optimisation, when the recognition network is optimised simultaneously with the parameters of the DGP model. Figure 6 shows separate bars for an uncontrolled gradient estimate and also for controlled gradient estimators in which a recognition network is trained using the partial gradient estimator $\tilde{V}^{PG}$, the gradient sum estimator $\tilde{V}^{GS}$, and the squared difference estimator $\tilde{V}^{SD}$ respectively. It is observed that the relative variance of the controlled gradient estimators compared with the uncontrolled gradient estimators decreases as the optimisation proceeds, with the partial gradient estimator yielding the greatest reduction in variance as expected. In the present example, a recognition network architecture with a single hidden layer of 1024 neurons is used with ReLU activation and Xavier initialisation.

Figure 7 shows respective differences $\Delta\mathcal{L}$ of the optimisation objective over the course of the optimisation procedure described above when compared with a single sample, uncontrolled, Monte Carlo gradient estimator. It is observed that lower values of the optimisation objective (corresponding to higher values of $-\Delta\mathcal{L}$) are consistently achieved when the present invention is employed (as shown by solid traces 702 and 704, corresponding to the estimators $\tilde{V}^{PG}$ and $\tilde{V}^{SD}$ respectively). The dashed traces 706 and 708 show results of using two and five Monte Carlo samples respectively. It is anticipated that significantly improved performance of the present method could be achieved by optimising the recognition network architecture, without significantly increasing the computational cost of performing the method.

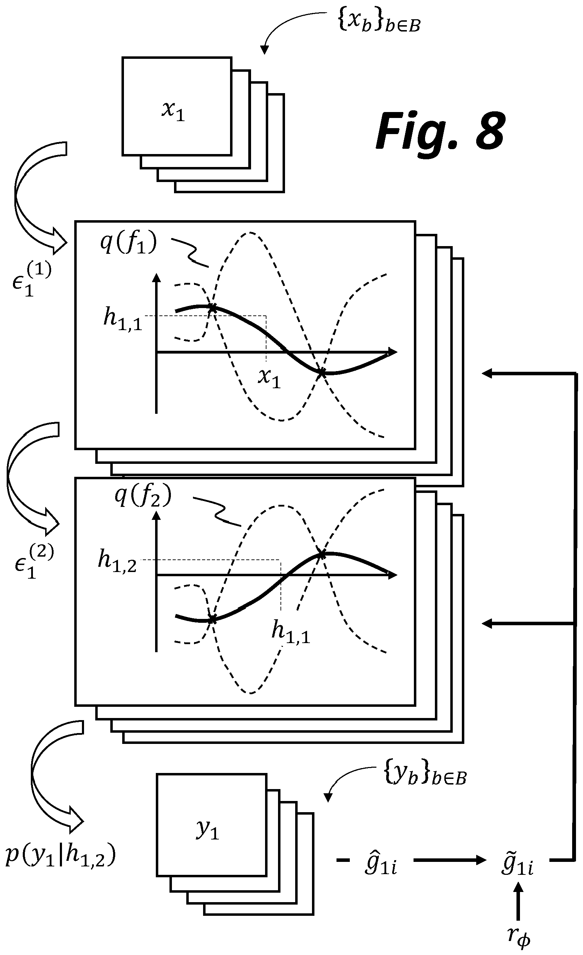

Figure 8 schematically shows a training phase for a two-layer DGP model ($L = 2$) in a regression setting of the type described above with reference to Figures 6 and 7. Each observation point $\tilde{x}_n$ in a large dataset has an input portion $x_n$ and an output portion $y_n$. At a given training iteration, a minibatch $B$ of observation points is sampled from the dataset. For each observation point in the minibatch, a first random variable $\epsilon_b^{(1)}$ is drawn from the normalised multivariate Gaussian distribution, and a vector $h_{b,1}$ is determined by evaluating the stochastic function $f_1(x_b)$ using the random variable $\epsilon_b^{(1)}$. A second random variable $\epsilon_b^{(2)}$ is then drawn from the normalised multivariate Gaussian distribution, and a vector $h_{b,2}$ is determined by evaluating the stochastic function $f_2(h_{b,1})$ using the random variable $\epsilon_b^{(2)}$. The likelihood $p(y_b|h_{b,2})$ is then evaluated at the vector $h_{b,2}$, and the logarithm of this likelihood is used as a Monte Carlo estimate of the expectation appearing in Equation (15). Reverse-mode differentiation is then performed to determine a partial gradient estimator $\hat{g}_{bi}$. The observation point $\tilde{x}_b$ is processed by the recognition network $r_\phi$ to generate control variates $c_{bi}$, which are used to determine a low-variance modified partial gradient estimator in accordance with the present invention. In Figure 8, the above process is illustrated for a first observation point $\tilde{x}_1 = (x_1, y_1)$ in the mini-batch *B,* with each of the vectors $x_1$, $h_{1,1}$ and $h_{1,2}$ shown as scalars for simplicity (though each of these would, in fact, be vectors in reality).

In addition to regression problems of the type discussed above, deep GP models of the kind discussed above are applicable to classification problems, in which case $y_n$ may be a class vector with entries corresponding to probabilities associated with various respective classes. Within a given training dataset, each class vector $y_n$ may therefore have a single entry of 1 corresponding to the known class of the data item $x_n$, with every other entry being 0. In the example of image classification, the vector $x_n$ has entries representing pixel values of an image. Image classification has a broad range of applications. For example, optical character recognition (OCR) is based on image classification in which the classes correspond to symbols such as alphanumeric symbols and/or symbols from other alphabets such as the Greek or Russian alphabets, or logograms such as Chinese characters or Japanese kanji. Image classification is further used in facial recognition for applications such as biometric security and automatic tagging of photographs online, in image organisation, in keyword generation for online images, in object detection in autonomous vehicles or vehicles with advanced driver assistance systems (ADAS), in robotics applications, and in medical applications in which symptoms appearing in a medical image such as a magnetic resonance imaging (MRI) scan or an ultrasound image are classified to assist in diagnosis.

In addition to image classification, DGPs may be used in classification tasks for other types of data, such as audio data, time-series data, or any other suitable form of data. Depending on the type of data, specialised kernels may be used within layers of the DGP, for example kernels exhibiting a convolutional structure in the case of image data, or kernels exhibiting periodicity in the case of periodic time-series data.

The above embodiments are to be understood as illustrative examples of the invention. Further embodiments of the invention are envisaged. For example, although in Figure 1 the methods are described as being performed by specific components of a data processing system, in other embodiments the functions of the various components may be implemented within processing circuitry and memory circuitry of a general-purpose computer. Alternatively, the functions may be implemented by a distributed computing system. In some examples, the methods described herein may be combined with methods of reducing mini-batch variance, for example Stochastic Variance Reduced Gradient (SVRG) as described in "Accelerating stochastic gradient descent using predictive variance reduction", Johnson and Zhang, 2013, or variants thereof. Although in the example embodiments described above, the recognition network was assumed to have separate output nodes for each component $i = 1, ..., R$ of the set $\theta$ of model parameters, in other embodiments fewer output nodes may be used, for example by letting the input of the regression network depend on the component label *i*. In some examples, the input of the recognition network may further depend on the values of the model parameters or on indicators associated with the model parameters. Other configurations of recognition network are possible. For example, a recognition may have a convolutional structure, which may be particularly suitable when applied to a model with a convolutional structure, such as a convolutional DGP. In another example, a recognition network may have several associated modules, for example a first module to process the model parameters and a second module to process the observation points. The outputs of the modules may then be processed together within a layer of the recognition network.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A data processing system for inferring a statistical model from a dataset comprising a plurality of observation points, the system comprising:

   first memory circuitry arranged to store the dataset;
   second memory circuitry arranged to store a set of parameters for the statistical model;
   a sampler arranged to randomly sample a mini-batch of the observation points from the dataset and transfer the sampled mini-batch from the first memory circuitry to the second memory circuitry;
   processing circuitry arranged to determine, for each observation point in the sampled mini-batch, a stochastic estimator for a respective component of a gradient of an objective function with respect to the parameters of the statistical model; and
   a recognition network module arranged to:

process the observation points in the sampled mini-batch using a neural recognition network to generate, for each observation point in the mini-batch, a respective set of control coefficients; and

modify, for each observation point in the sampled mini-batch, the stochastic estimator for the respective component of the gradient using the respective set of control coefficients,

wherein the processing circuitry is arranged to update the parameters of the statistical model in accordance with a gradient estimate based on the modified stochastic estimators, to increase or decrease the objective function.

2. The data processing system of claim 1, wherein the recognition network module is arranged to update parameters of the neural recognition network to reduce a variance associated with the stochastic estimators.

3. The data processing system of claim 2, wherein the recognition network module is arranged to update the parameters of the neural recognition network by:

determining an estimated variance associated with the stochastic estimators; and
performing a gradient-based update of the parameters of the neural recognition network to reduce the estimated variance.

4. The data processing system of any preceding claim, wherein each of the determined stochastic estimators comprises a single Monte Carlo sample of the respective component of the gradient.

5. The data processing system of any preceding claim, wherein:

each of the determined stochastic estimators depends on a respective random variable evaluation; and
modifying a stochastic estimator comprises adding or subtracting a control variate term which is a linear function of the respective random variable evaluation.

6. The data processing system of any preceding claim, wherein the statistical model is a Gaussian process model or a deep Gaussian process model.

7. The data process system of any preceding claim, wherein:

each observation point in the dataset comprises an image and an associated class label; and
the inferred statistical model is for classifying unlabelled images.

8. A computer-implemented method of inferring a statistical model from a dataset comprising a plurality of observation points, the method comprising:

storing a set of parameters of the statistical model;
randomly sampling a mini-batch of the observation points from the dataset;
determining, for each observation point in the sampled mini-batch, a stochastic estimator for a respective component of a gradient of an objective function with respect to the parameters of the statistical model;
processing the observation points in the sampled mini-batch using a neural recognition network to generate, for each observation point in the mini-batch, a respective set of control coefficients;
modifying, for each observation point in the sampled mini-batch, the respective stochastic estimator for the respective component of the gradient using the respective set of control coefficients; and
updating the parameters of the statistical model in accordance with a gradient estimate based on the modified stochastic estimators, to increase or decrease the objective function.

9. The method of claim 8, comprising updating parameters of the neural recognition network to reduce a variance associated with the stochastic estimators.

10. The method of claim 9, wherein updating the parameters of the neural recognition comprises:

determining an estimated variance associated with the stochastic estimators; and
performing a gradient-based update of the parameters of the neural recognition network to reduce the estimated variance.

11. The method of any of claims 8 to 10, wherein each of the determined stochastic estimators comprises a single Monte Carlo sample of the respective component of the gradient.

12. The method of any of claims 8 to 11, wherein:

each of the determined stochastic estimators depends on a respective random variable evaluation; and
modifying a respective stochastic estimator comprises adding or subtracting a control variate term which is a linear function of the respective random variable evaluation.

13. The method of any of claims 8 to 12, wherein the statistical model is a Gaussian process model or a deep Gaussian process model.

14. The method of any of claims 8 to 13, wherein:

each observation point in the dataset comprises an image and an associated class label; and
the inferred statistical model is for classifying unlabelled images.

15. A computer program product comprising instructions which, when executed by a computer, cause the computer to perform the method of any of claims 8 to 14.

*Fig. 1*

Inference system | Recognition network module

```
          ┌──────────────────┐
     ┌────►│   Sample mini-   │
     │     │  batch of data   │  S202
     │     │     points       │
     │     └──────────────────┘
     │              │
     │     ┌──────────────────┐
     │     │     Evaluate     │
     │     │    stochastic    │
     │     │ function for each│  S204
     │     │  data point in   │
     │     │    mini-batch    │
     │     └──────────────────┘
     │              │
     │     ┌──────────────────┐      ┌ ─ ─ ─ ─ ─ ─ ─ ─ ┐   S208
     │     │    Determine     │           Update
     │     │    gradient      │─────►│  recognition    │
     │     │   estimators     │          network
     │     └──────────────────┘      └ ─ ─ ─ ─ ─ ─ ─ ─ ┘
     │  S206      ┊                           │
     │            ┊                  ┌──────────────────┐
     │            ┊            S210   │  Process data    │
     │            ┊                  │  points using    │
     │            ┊            S212   │  recognition     │
     │            ┊                  │  network to      │
     │            ▼                  │ determine control│
     │     ┌──────────────────┐      │  coefficients    │
     │     │ Perform gradient │◄──── └──────────────────┘
     └─────│ descent update   │             │
           └──────────────────┘      ┌──────────────────┐
                                     │ Modify gradient  │
                                     │   estimators     │
                                     └──────────────────┘
```

S214

# *Fig. 2*

**Fig. 3**

Fig. 4

**Fig. 5**

**a)**

**b)**

**c)**

# Fig. 6

**Fig. 7**

Fig. 8

Europäisches
Patentamt

European
Patent Office

Office européen
des brevets

# EUROPEAN SEARCH REPORT

Application Number

EP 19 19 2404

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/325401 A1 (BOUCHARD GUILLAUME [FR]) 5 December 2013 (2013-12-05) * abstract * * paragraph [0012] - paragraph [0028] * * figures 1,2 * ----- | 1-15 | INV. G06N3/08 G06N7/00 G06N20/10 G06N20/20 |
| A | Gregory Lawrence ET AL: "Efficient Gradient Estimation for Motor Control Learning", , 19 October 2012 (2012-10-19), XP055667519, Retrieved from the Internet: URL:https://arxiv.org/ftp/arxiv/papers/121 2/1212.2475.pdf [retrieved on 2020-02-11] * abstract * * page 354, left-hand column, line 1 - page 358, right-hand column, line 7 * ----- | 1-15 | ADD. G06N3/04 |

TECHNICAL FIELDS
SEARCHED (IPC)

G06N

The present search report has been drawn up for all claims

| Place of search | Date of completion of the search | Examiner |
|---|---|---|
| The Hague | 12 February 2020 | Appeltant, Lennert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...........................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 19 2404

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2020

| Patent document cited in search report | Publication date | Patent family member(s) | Publication date |
|---|---|---|---|
| US 2013325401 A1 | 05-12-2013 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JOHNSON ; ZHANG.** *Accelerating stochastic gradient descent using predictive variance reduction,* 2013